# EUROPEAN PATENT APPLICATION

(11) **EP 4 571 963 A2**
(43) Date of publication of application: **18.06.2025**
(21) Application number: 24803601.4
(22) Date of filing: 04.04.2024
(51) Int. Cl.: H01M 50/152, H01M 50/167, H01M 50/342, H01M 50/538, H01M 50/213, H01M 50/249

(54) **CYLINDRICAL BATTERY, AND BATTERY PACK AND VEHICLE INCLUDING SAME**

(30) Priority: 08.05.2023 KR 20230059395
(71) Applicant: LG Energy Solution, Ltd., Seoul 07335 (KR)
(72) Inventor: CHOI, Su-Ji, Daejeon 34122 (KR); LEE, Da-Som, Daejeon 34122 (KR); KO, Kwang-Hun, Daejeon 34122 (KR); KIM, Do-Gyun, Daejeon 34122 (KR); YOUN, Young-Suk, Daejeon 34122 (KR); HWANGBO, Kwang-Su, Daejeon 34122 (KR)
(74) Representative: Goddar, Heinz J.
(86) International application number: PCT/KR2024/004440
(87) International publication number: WO 2024/232545

(57) **Abstract**

The present disclosure discloses a cylindrical battery having a structure with little deformation due to crimping pressure during the crimping process in the battery manufacturing process.

A cylindrical battery according to one aspect of the present disclosure includes an electrode assembly having a first electrode and a second electrode, a battery housing configured to receive the electrode assembly through an opening formed at the top, and a top cap configured to cover the opening and including an edge area, a central area positioned further inward than the edge area, and a bent area that is positioned between the edge area and the central area and has a first bent portion shaped to be convexly bent downward.

## Description

### TECHNICAL FIELD

The present disclosure relates to a cylindrical battery, and a battery pack and vehicle including the same, and more specifically, it relates to a cylindrical battery having a structure that is less subject to deformation due to crimping pressure during a crimping process in a battery manufacturing process, and a battery pack and vehicle including the same.

The present application claims priority to Korean Patent Application No. 10-2023-0059395 filed on May 08, 2023 and in the Republic of Korea, the disclosures of which are incorporated herein by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These secondary batteries are attracting attention as a new energy source for improving eco-friendliness and energy efficiency because of the primary advantage of dramatically reducing the use of fossil fuels and another advantage of not generating byproducts resulting from energy use.

Current secondary batteries widely used include lithium-ion batteries, lithium-polymer batteries, nickel-cadmium batteries, nickel-hydrogen batteries, nickel-zinc batteries, and the like. The operating voltage of this unit secondary battery cell is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Meanwhile, as types of secondary battery cells, cylindrical, prismatic, and pouch-type batteries are known. In the case of a cylindrical battery, a positive electrode and a negative electrode are wound while a separator, as an insulator, is interposed therebetween, to form a j elly-roll-type electrode assembly, and the electrode assembly is stored in a battery housing together with an electrolyte. After that, a crimping process is performed so that the upper end of the battery housing is bent to surround the edge of a top cap. A crimping portion is formed through the crimping process so as to fix the top cap to the top of the battery.

During this crimping process, a large force is applied to the battery housing and the top cap, so a high pressure is applied to the top cap in the central direction (side force) and downward direction thereof. This pressure causes deformation of the top cap.

### DISCLOSURE

### Technical Problem

The present disclosure has been designed to solve the problems of the related art, and therefore the present disclosure aims to minimize deformation caused by crimping pressure during the crimping process.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a

A cylindrical battery according to an embodiment of the present disclosure may include an electrode assembly having a first electrode and a second electrode, a battery housing configured to receive the electrode assembly through an opening formed at the top, and a top cap configured to cover the opening and including an edge area, a central area positioned further inward than the edge area, and a bent area that is positioned between the edge area and the central area and has a first bent portion shaped to be convexly bent downward.

The central area may be positioned higher than the edge area.

The upper end of the battery housing may be positioned higher than the upper end of the central area.

The lower end of the first bent portion may be positioned lower than the lower end of the central area and the lower end of the edge area.

The bent area may include a second bent portion shaped to be convexly bent upward.

The central area may include a second bent portion shaped to be convexly bent upward.

The upper end of the second bent portion may be positioned at the same height as the upper end of the battery housing.

The top cap may include a venting portion that is configured to be more vulnerable than the surrounding area.

The venting portion may be thinner than the surrounding area.

The venting portion may be provided in the central area.

The top cap may be configured not to have polarity.

The cylindrical battery may include a first collector that is positioned between the electrode assembly and the top cap and includes a first electrode coupling portion electrically coupled to the first electrode tap, and a housing coupling portion coupled onto the inner surface of the battery housing.

The first bent portion may be positioned on the housing coupling portion.

A battery pack according to the present disclosure may include the cylindrical battery according to the present disclosure.

A vehicle according to the present disclosure may include the battery pack according to the present disclosure.

### Advantageous Effects

According to one aspect of the present disclosure, even if a high pressure is applied to the top cap in the central direction during the crimping process, the pressure may be buffered through the bent portion. When pressure is applied toward the center and bottom of the top cap, only a slight deformation occurs in the bent portion because the bent portion is shaped to be bent, and no deformation occurs or the deformation is minimized in the edge area and the central area that are roughly flat. Therefore, even if the crimping process is performed, the deformation of the top cap is small, thereby improving the stability and durability of the battery.

According to another aspect of the present disclosure, the central area is configured to collect gas generated inside the battery, compared to the case where the central area is positioned lower than the edge area. Therefore, the central area may be more subject to the pressure by the gas. If the internal pressure of the battery housing increases to a certain level due to abnormalities in the battery, the central area may rupture or the crimping portion may loosen, causing gas to be released.

According to another aspect of the present disclosure, if the opening is located at the bottom, the bottom of the battery housing may touch the ground or the bottom surface of the housing for the module or pack, but the top cap may not touch the ground or the bottom surface of the housing for the module or pack. Therefore, the risk of scratching or damage to the top cap may be reduced. This configuration may also prevent the pressure for rupture of the venting portion formed on the top cap from differing from a design value.

According to another aspect of the present disclosure, the total height of the top cap may be reduced. Therefore, the height of the electrode assembly may be increased by the height reduced due to the top cap, thereby improving the energy density.

According to another aspect of the present disclosure, the movement of the collector in the Z-axis direction may be controlled. Therefore, the collector may be stably coupled to the battery housing.

### DESCRIPTION OF DRAWINGS

FIG. 1 is a cross-sectional view of a cylindrical battery according to the present disclosure.
FIG. 2 is a drawing illustrating the appearance of a cylindrical battery according to the present disclosure.
FIG. 3 is a drawing illustrating a cylindrical battery prior to a crimping process according to the present disclosure.
FIG. 4 is a drawing illustrating a top cap, which is partially cut away, included in a cylindrical battery according to the present disclosure.
FIGS. 5 to 10 are cross-sectional views of a top cap included in a cylindrical battery according to the present disclosure.
FIG. 11 is a cross-sectional view of a cylindrical battery according to the present disclosure.
FIG. 12 is a drawing illustrating a battery pack according to the present disclosure.
FIG. 13 is a drawing illustrating a vehicle according to the present disclosure.

### BEST MODE

Hereinafter, preferred embodiments of the present disclosure will be described in detail with reference to the accompanying drawings. The accompanying drawings illustrate a preferred embodiment of the present disclosure and, together with the detailed description of the invention, serve to provide further understanding of the technical idea of the present disclosure, and thus, the present disclosure is not construed as being limited to the drawings. The same reference numerals indicate the same elements. The sizes of respective elements or specific parts of each element shown in the attached drawings are exaggerated, omitted, or simplified for convenience of explanation and clarification thereof.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Although terms indicating directions such as upward, downward, left, right, forward, and backward directions are used in this specification, it is obvious to those skilled in the art that these terms are only for convenience of explanation and may vary depending on the location of the target object or the location of the observer.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

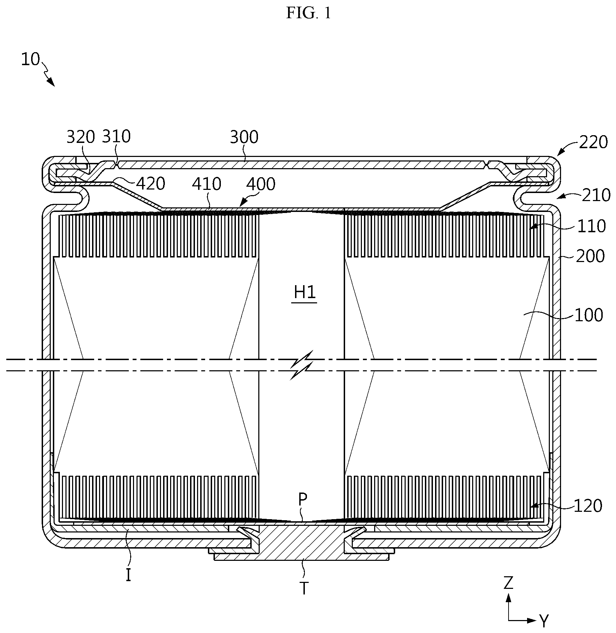

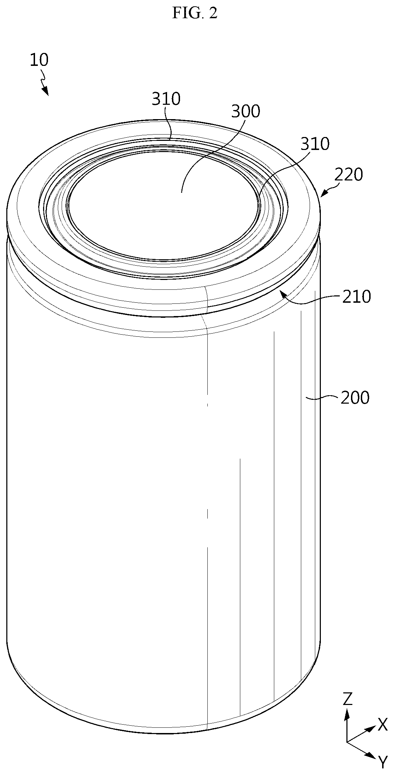

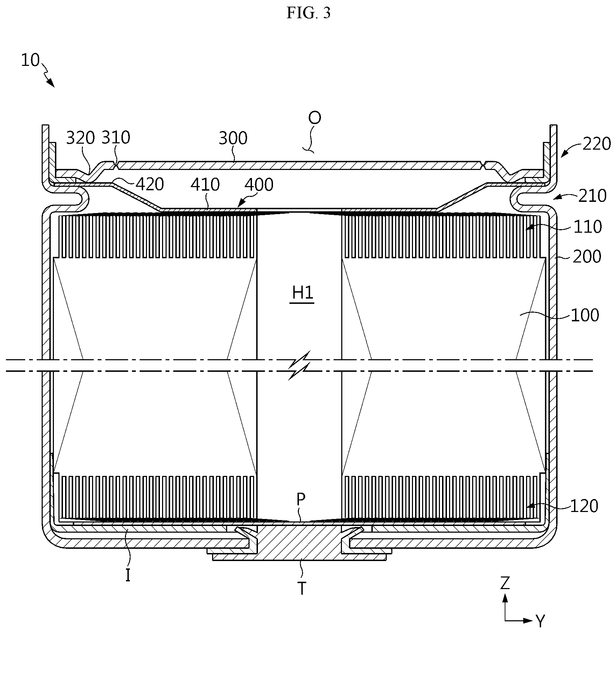

FIG. 1 is a cross-sectional view of a cylindrical battery according to the present disclosure. FIG. 2 is a drawing illustrating the appearance of a cylindrical battery according to the present disclosure. FIG. 3 is a drawing illustrating a cylindrical battery prior to a crimping process according to the present disclosure.

Referring to FIGS. 1 to 3, a cylindrical battery 10 according to the present disclosure may include an electrode assembly 100, a battery housing 200, and a top cap 300.

The electrode assembly 100 may include a first electrode tap 110 and a second electrode tap 120. The electrode assembly 100 includes a first electrode having a first polarity, a second electrode having a second polarity, and a separator interposed between the first electrode and the second electrode. The first electrode is a negative electrode or a positive electrode, and the second electrode corresponds to an electrode having a polarity opposite that of the first electrode. The electrode assembly 100 may be manufactured by winding a stack, in which the first electrode, the separator, the second electrode, and the separator are sequentially stacked, at least once. That is, the electrode assembly 100 applied to the present disclosure may be a jelly-roll-type electrode assembly 100. The first electrode may be a positive electrode or a negative electrode, and the second electrode may be an electrode having an opposite polarity of the first electrode.

The jelly-roll-type electrode assembly 100 may have a winding center hole **H1** formed approximately at the center thereof and extending in the height direction (the direction parallel to the Z axis).

The first electrode may include a first electrode plate and a first electrode active material layer formed by applying a first electrode active material onto at least one surface of the first electrode plate. The second electrode may include a second electrode plate and a second active material layer formed by applying a second electrode active material onto at least one surface of the second electrode plate. The first electrode may include a first uncoated portion on which a positive electrode active material or a negative electrode active material is not applied to the electrode plate. The second electrode may include a second uncoated portion on which a positive electrode active material or a negative electrode active material is not applied to the electrode plate. For example, the first uncoated portion may be provided at the top of the electrode assembly 100, and the second uncoated portion may be provided at the bottom of the electrode assembly 100. At least a portion of the first uncoated portion may function as the first electrode tap 110, and at least a portion of the second uncoated portion may function as the second electrode tap 120. Meanwhile, in the present disclosure, the electrode taps 110 and 120 are not limited to at least portions of the uncoated portions. That is, the electrode taps 110 and 120 may be provided separately and coupled to the uncoated portion.

The battery housing 200 may receive the electrode assembly 100 through an opening O formed at the top. The battery housing 200 may be a substantially cylindrical container with an opening O formed at the top, and may be made of a conductive metal material. The side surface of the battery housing 200 and the lower surface (the surface located in the negative Z-axis direction) located opposite to the opening O may be formed integrally. That is, the battery housing 200 may have an open top and a closed bottom in the height direction. The lower surface of the battery housing 200 may be shaped to be substantially flat. The battery housing 200 may also receive an electrolyte through the opening O. However, the battery housing 200 of the present disclosure is not limited thereto.

The battery housing 200 may include a recessed portion 210 and a crimping portion 220.

The recessed portion 210 may be formed at an end adjacent to the opening O so as to be pressed inward. The recessed portion 210 may be configured such that the outer circumferential surface of the battery housing 200 is pressed to a predetermined depth. The recessed portion 210 may be formed at the top of the electrode assembly 100. The inner diameter of the battery housing 200 may be formed smaller than the diameter of the electrode assembly 100 in the area where the recessed portion 210 is formed.

The crimping portion 220 may be formed at the top of the recessed portion 210. The crimping portion 220 may be configured to extend and bend so as to surround the edge area S1 of the top cap 300, which will be described later. The top cap 300 may be fixed onto the recessed portion 210 by the shape of the crimping portion 220.

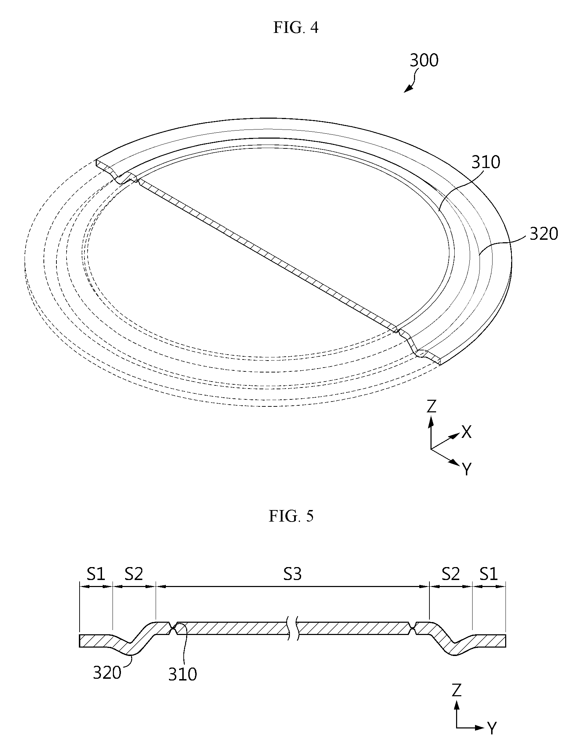

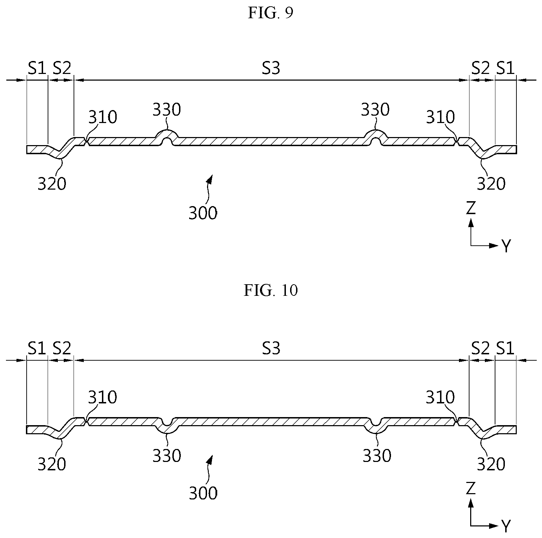

FIG. 4 is a drawing illustrating a top cap, which is partially cut away, included in a cylindrical battery according to the present disclosure. FIGS. 5 to 10 are cross-sectional views of a top cap included in a cylindrical battery according to the present disclosure.

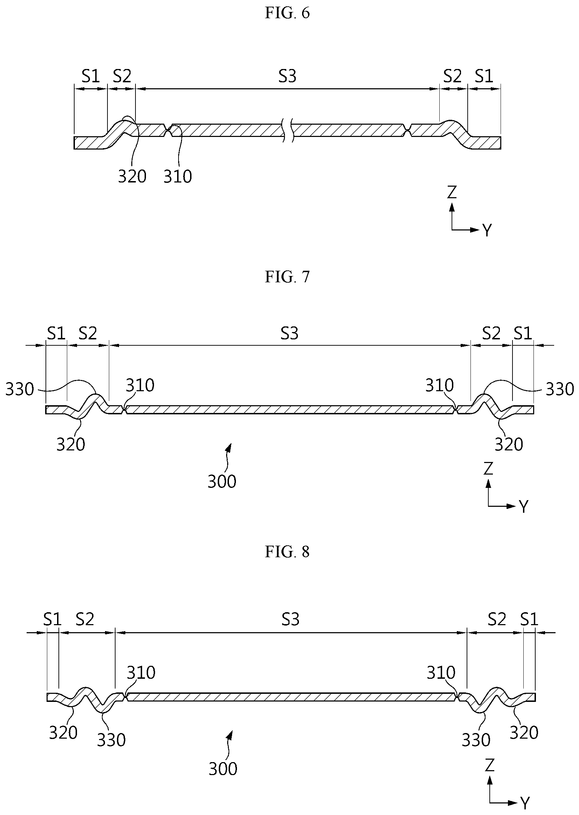

Referring to FIG. 5 together with FIGS. 1 to 3, the top cap 300 may be configured to cover the opening O. The top cap 300 may include an edge area S1, a central area S3, and a bent area S2. The edge area S1 may be located at the outermost portion of the top cap 300. The edge area S1 may be surrounded by the battery housing 200 during the crimping process. The central area S3 may be located further inward than the edge area S1. The bent area S2 may be located between the central area S3 and the edge area S1. The bent area S2 may have a first bent portion 320 shaped to be convexly bent downward. However, as shown in FIG. 6, the first bent portion 320 may also be shaped to be convexly bent upward.

The top cap 300 may be configured not to have polarity. That is, in the present disclosure, the top cap 300 may be configured not to be electrically connected to the electrode assembly 100. The top cap 300 may be made of, for example, a metal material to secure rigidity, but may not have polarity even in this case. The top cap 300 may include an insulating material. However, the present disclosure is not limited to the configuration in which the top cap 300 does not have polarity, and it may have the same polarity as the battery housing 200.

According to this configuration of the present disclosure, even if a high pressure is applied toward the center of the top cap 300 during the crimping process described above, the pressure may be buffered through the first bent portion 320. When pressure is applied toward the center and bottom of the top capable of 300, only a slight deformation may occur in the first bent portion 320 because the first bent portion 320 is shaped to be bent, and no deformation may occur or the deformation may be minimized in the edge area S1 and the central area S3 that are roughly flat. Therefore, even if the crimping process is performed, the deformation of the top cap 300 may be small, thereby improving the stability and durability of the battery.

Referring to FIGS. 4 to 6, the central area S3 may be positioned higher than the edge area S1.

According to this configuration of the present disclosure, compared to the case where the central area S3 is positioned lower than the edge area S1, the central area S3 may collect gas generated inside the battery. Therefore, the central area S3 may be more subject to the pressure by the gas. If the internal pressure of the battery housing 200 increases to a certain level due to abnormalities in the battery, the central area S3 may rupture or the crimping portion 220 may loosen, causing the gas to be released.

Referring to FIGS. 4 to 6 together with FIG. 1, the upper end of the battery housing 200 may be positioned higher than the upper end of the central area S3.

According to this configuration of the present disclosure, in the case where the opening O is located at the bottom, even if the bottom of the battery housing 200 touches the ground or the bottom surface of the housing for the module or pack, the top cap 300 does not touch the ground or the bottom surface of the housing for the module or pack. Therefore, the risk of scratching or damage to the top cap 300 may be reduced. In addition, even if the venting portion 310 described below is provided on the top cap 300, since the venting portion 310 does not touch the ground or the bottom surface of the housing for the module or pack, it is possible to prevent the pressure required for the rupture of the venting portion 310 from differing from the design value due to the weight of the cylindrical battery 10, thereby securing the smooth rupture of the venting portion 310.

Referring to FIGS. 4 and 5, the lower end of the first bent portion 320 may be positioned lower than the lower end of the central area S3 and the lower end of the edge area S1. The lower end of the first bent portion 320 bent downward may be positioned lower than the lower end of the central area S3 and the lower end of the edge area S1.

According to this configuration of the present disclosure, the total height of the top cap 300 may be reduced, compared to the case where the first bent portion 320 is shaped to be convex upward or where the lower end of the first bent portion 320 is positioned equal to or higher than the lower end of the central area S3 and the lower end of the edge area S1. Therefore, the height of the electrode assembly 100 may be increased by the height reduced by the top cap 300, thereby improving the energy density.

Referring to FIG. 7, the bent area S2 may include a second bent portion 330 that is bent convexly upward. The central area S3 may include a second bent portion 330 that is bent convexly upward. That is, the second bent portion 330 that is bent convexly upward may be provided in the bent area S2 and/or the central area S3. However, as shown in FIG. 8, the second bent portion 330 may also be shaped to be bent convexly downward.

In addition, the bent area S2 and/or the central area S3 may further include two or more additional bent portions that are bent downward or upward.

Referring to FIG. 7, the upper end of the second bent portion 330 may be positioned at the same height as the upper end of the battery housing 200. The upper end of the second bent portion 330 bent upward may be positioned at the same height as the upper end of the battery housing 200.

According to this configuration of the present disclosure, in the case where the opening O is located at the bottom, since the battery is supported by the second bent portion 330, as well as the battery housing 200, it may be supported more stably. In addition, if the venting portion 310 described below is provided in the top cap 300, and if this venting portion 310 is formed further inward from the center than the second bent portion 330, the crimping pressure may be absorbed by the second bent portion 330, so it is possible to prevent the pressure required for the breakage or rupture of the venting portion 310 by the force applied to the venting portion 310 from differing from the design value. In addition, if two or more bent portions are provided, the crimping pressure that the top cap may absorb may be increased.

Referring back to FIGS. 1 to 10, the top cap 300 according to the present disclosure may have a venting portion 310 that is configured to be more vulnerable than the surrounding area. The venting portion 310 may have a thickness less than the surrounding area. The venting portion 310 may be provided in the central area S3. The venting portion 310 may be formed by notching one side or both sides of the top cap 300 to partially reduce the thickness of the top cap 300.

According to this configuration of the present disclosure, if the internal pressure of the battery housing 200 increases to a certain level due to abnormalities in the battery, the venting portion 310 may rupture, so that gas may be discharged.

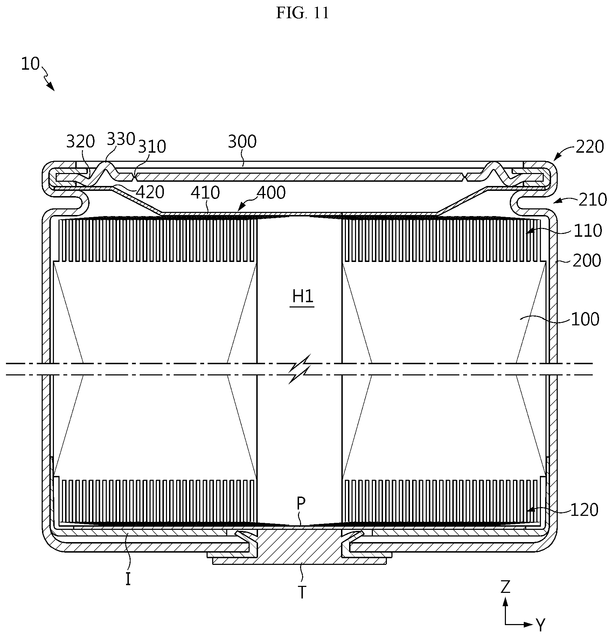

Referring to FIGS. 1 and 11, the cylindrical battery 10 according to the present disclosure may include a first collector 400. The first collector 400 may be positioned between the electrode assembly 100 and the top cap 300. The first collector 400 may have a first tab-coupling portion 410 electrically coupled to the first electrode tap 110. The first collector 400 may have a housing coupling portion 420 coupled onto the inner surface of the battery housing 200.

The first bent portion 320 may be positioned on the housing coupling portion 420. The first bent portion 320 may be positioned to be in contact with the housing coupling portion 420 and be seated thereon. However, even if they are not in contact with each other, the first bent portion 320 may be positioned to overlap the housing coupling portion 420 in the extension direction along the Z axis. In the case where the top cap is configured not to have polarity, at least the first bent portion 320 in contact with the housing coupling portion 420 may be insulated.

According to this configuration of the present disclosure, if the housing coupling portion 420 moves due to gas generated inside the battery or external impact, it is possible to control the upward movement (in the positive Z-axis direction) by the first bent portion 320. Therefore, the housing coupling portion 420 may be stably coupled to the battery housing 200.

Referring to FIG. 1 and FIG. 11, the cylindrical battery 10 according to the present disclosure may include a terminal T, a second collector P, and an insulator I.

The terminal T may be electrically connected to the second electrode tap 120. The terminal T may be electrically connected to the second electrode tap 120 by passing through the closed portion of the battery housing 200 provided on the opposite side of the opening O of the battery housing 200. The terminal T may pass through approximately the center of the lower surface of the battery housing 200. The terminal T may be electrically connected to the electrode assembly 100 by being coupled to the second collector P to be described below.

The second collector P may be electrically coupled to the second electrode tap 120. The second collector P may be electrically coupled to the terminal T. The second collector P may have a terminal-coupling portion coupled with the terminal T, and a second tab-coupling portion coupled with the second electrode tap 120.

The insulator I may be positioned on the second electrode tap 120 for insulation between the battery housing 200 and the second electrode tap 120. The insulator I may be interposed between the closed portion of the battery housing 200 and the electrode assembly 100 or between the closed portion of the battery housing 200 and the second collector P. The insulator I may include, for example, a resin material having insulating properties. The insulator I may have a hole approximately at the center so that the terminal T may be electrically connected to the second electrode tap 120.

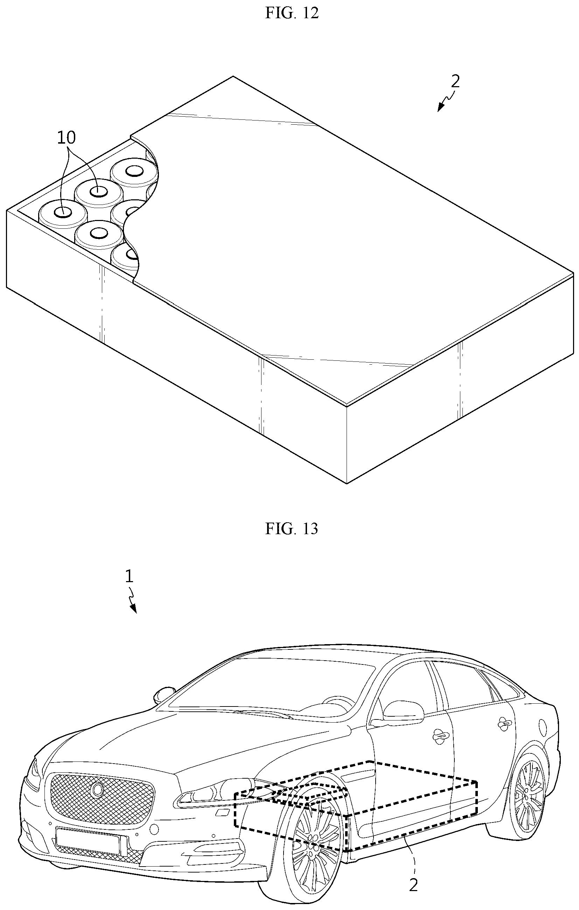

FIG. 12 is a drawing illustrating a battery pack 2 according to the present disclosure.

Referring to FIG. 12, the battery pack 2 according to the present disclosure may include a cylindrical battery 10. The battery pack 2 may further include various components of the battery pack 2 known at the time of filing the present disclosure, in addition to the cylindrical battery 10, such as a BMS, a bus-bar, a pack case, a relay, a current sensor, and the like

If the cylindrical battery 10 included in the battery pack 2 shown in FIG. 12 is positioned while the top cap 300 faces downward, the battery housing 200 functioning as the first electrode terminal and the terminal T functioning as the second electrode terminal are positioned at the top. This may facilitate electrical connection performed at the top. In addition, as described above, since the venting portion 310 does not touch the ground or the bottom surface of the housing for the module or pack, it is possible to prevent the pressure required for the rupture of the venting portion 310 from differing from the design value due to the weight of the cylindrical battery 10, thereby securing the smooth rupture of the venting portion 310.

FIG. 13 is a drawing illustrating a vehicle 1 according to the present disclosure.

Referring to FIG. 13, the vehicle 1 according to the present disclosure may include a battery pack 2. The vehicle 1 may be a hybrid vehicle 1 or an electric vehicle 1. The vehicle 1 according to the present disclosure may further include various other components included in the vehicle 1, in addition to the battery pack 2. For example, the vehicle 1 according to the present disclosure may further include a car body, a motor, a control device such as an ECU (electronic control unit), or the like, in addition to the battery pack 2 according to the present disclosure.

As described above, although the present disclosure has been described with reference to limited embodiments and drawings, it is obvious to those skilled in the art that various modifications are possible within the scope of the present disclosure. Therefore, the scope of the present disclosure should be construed by the claims to be described to encompass such modifications.

## Claims

1. A cylindrical battery comprising:
an electrode assembly comprising a first electrode tap and a second electrode tap;
a battery housing configured to receive the electrode assembly through an opening formed at the top; and
a top cap configured to cover the opening and comprising an edge area, a central area positioned further inward than the edge area, and a bent area that is positioned between the edge area and the central area and has a first bent portion shaped to be convexly bent downward.

2. The cylindrical battery according to claim **1,**
wherein the central area is positioned higher than the edge area.

3. The cylindrical battery according to claim 2,
wherein the upper end of the battery housing is positioned higher than the upper end of the central area.

4. The cylindrical battery according to claim 1,
wherein the lower end of the first bent portion is positioned lower than the lower end of the central area and the lower end of the edge area.

5. The cylindrical battery according to claim 1,
wherein the bent area comprises a second bent portion shaped to be convexly bent upward.

6. The cylindrical battery according to claim 1,
wherein the central area comprises a second bent portion shaped to be convexly bent upward.

7. The cylindrical battery according to claim 5,
wherein the upper end of the second bent portion is positioned at the same height as the upper end of the battery housing.

8. The cylindrical battery according to claim 1,
wherein the top cap comprises a venting portion that is configured to be more vulnerable than the surrounding area.

9. The cylindrical battery according to claim 8,
wherein the venting portion is thinner than the surrounding area.

10. The cylindrical battery according to claim 8,
wherein the venting portion is provided in the central area.

11. The cylindrical battery according to claim 8,
wherein the top cap is configured not to have polarity.

12. The cylindrical battery according to claim 1, comprising a first collector that comprises:
a first electrode coupling portion electrically coupled to the first electrode tap; and
a housing coupling portion coupled onto the inner surface of the battery housing, and
is positioned between the electrode assembly and the top cap.

13. The cylindrical battery according to claim 12,
wherein the first bent portion is positioned on the housing coupling portion.

14. A battery pack comprising the cylindrical battery according to claims 1.

15. A vehicle comprising the battery pack according to claim 14.
